Europäisches Patentamt

European Patent Office

Office européen des brevets

(19)

(11) **EP 1 189 072 A2**

(12) **EUROPÄISCHE PATENTANMELDUNG**

(43) Veröffentlichungstag:
   **20.03.2002 Patentblatt 2002/12**

(51) Int Cl.⁷: **G01S 3/784**

(21) Anmeldenummer: **01119986.6**

(22) Anmeldetag: **18.08.2001**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **19.09.2000 DE 10046785**

(71) Anmelder: **Jena-Optronik GmbH**
   **07745 Jena (DE)**

(72) Erfinder:
   • **Schröter, Karin**
     **07749 Jena (DE)**
   • **Strietzel, Roland**
     **01217 Dresden (DE)**
   • **Strumpf, Eckehard**
     **07743 Jena (DE)**

(74) Vertreter: **Freitag, Joachim (DE) et al**
   **Patentanwälte Oehmke & Kollegen**
   **Neugasse 13**
   **07743 Jena (DE)**

(54) **Anordnung zur Bestimmung des Einfallswinkels von Licht**

(57)   Die Erfindung betrifft eine Anordnung zur Bestimmung des Einfallswinkels von Licht, insbesondere von Sonnenlicht mittels eines Spalt- und Sensorarrays. Weiterhin soll eine geringe Anfälligkeit gegenüber Störlichtquellen und anderen Fehlersignalen erreicht werden.

Die Aufgabe, eine neue Möglichkeit zur Bestimmung des Einfallswinkels von Licht, die mit geringem Aufwand an Auswerteelektronik eine hohe Messgenauigkeit gewährleistet, zu finden, wird mit einem langgestreckten Sensorarray und einem Spalt zur Beleuchtung des Photodiodenarrays mit einem Lichtstreifen, wobei der Spalt orthogonal zu einer vorgegebenen Längsrichtung des Sensorarrays in einem definierten Abstand, der vor allem den maximal erfassbaren Einfallswinkel des Lichts vorgibt, über den lichtempfindlichen Flächen des Sensorarrays angeordnet ist, erfindungsgemäß dadurch gelöst, dass das Sensorarray eine reihenförmige Anordnung mehrerer kongruenter Photodiodenflächen mit im wesentlichen gleicher Länge und Breite ist, wobei die Photodiodenflächen jeweils eine solche Größe aufweisen, dass bei Beleuchtung mit dem Lichtstreifen in einer Photodiodenfläche ein maximaler Photostrom, der einen Mindestbetrag zur Unterteilung in digitale Auflösungsstufen gewünschter Größe und Anzahl aufweist, ausgelöst wird, und dass die Photodiodenflächen so aneinandergereiht sind und an deren Längsausdehnung die Breite des durch die Spaltbreite vorgegebenen Lichtstreifens so angepasst ist, dass trotz lichtunempfindlicher Stege, die zur elektrischen Isolation benachbarter Photodiodenflächen notwendig sind, sich Anteile der lichtempfindlichen Photodiodenflächen in Längsrichtung des Photodiodenarrays überlappen, wobei von dem abgebildeten Lichtstreifen zu jedem Zeitpunkt mindestens zwei Photodiodenflächen gleichzeitig einen signifikanten Photostrom liefern.

Fig. 4

EP 1 189 072 A2

**Beschreibung**

Die Erfindung betrifft eine Anordnung zur Bestimmung des Einfallswinkels von Licht, insbesondere von Sonnenlicht mittels eines Spalt- und Sensorarrays.

Die Erfindung findet vornehmlich Anwendung für Zwecke der Lagebestimmung und Orientierung von Raumflugkörpern gegenüber der Sonne.

In der Raumfahrt ist zur Problemlösung der Lagebestimmung von Raumflugkörpern eine ganze Reihe von sogenannten Sonnensensoren bekannt geworden. Von der Vielzahl der Sensoren soll im folgenden nur die Kategorie vorgestellt werden, die den Lichteinfallswinkel durch Erfassung der Lageänderung der Abbildung eines Fensters oder Spaltes auf einem Sensorarray feststellen.

Die Patentschrift US 52 64 691 beschreibt ein System zur Bestimmung der Richtung einfallender optischer Strahlung, bei dem ein Flächensensor zum Einsatz kommt. Hierbei wird das Sonnenlicht durch eine Maske mit rechteckigem Fenster auf den Sensor projiziert, wobei die abgeschattete Fläche im Verhältnis zur beleuchteten Fläche des Sensors eine Auswertung des Einfallswinkels in zwei orthogonalen Koordinatenrichtungen erlaubt. Nachteilig erweist sich hier vor allem die große Fensterfläche, durch die durch Störlichtquellen erhebliche Verfälschungen der Winkelbestimmung entstehen können.

In der Druckschrift US 48 74 937 ist ein digitaler Sonnensensor offenbart, bei dem über einem linearen Sensorarray (CCD) rechtwinklig zu dessen Längsausdehnung eine Spaltblende angeordnet ist, deren Abstand von dem Sensorarray durch ein optisches planparalleles Prisma vorgegeben ist. Das unter einem bestimmten Winkel in die Spaltblende einfallende Sonnenlicht wird durch schmalbandige Filterung vom Prisma einheitlich gebrochen und fällt so auf eine bestimmte Gruppe von CCD-Sensorelementen, aus denen eine Elektronikschaltung durch eine spezielle Impulsfolgenzerlegung das Maximum ermittelt und den Einfallswinkel berechnet.

Ein weiterer Sonnensensor für einen Satelliten ist im Patent US 56 98 842 in Form eines Spalt- oder Lochblendensensors veröffentlicht. Dieser Sensor zeichnet sich durch eine besonders dicke (2,5 bis 10 mm) Spaltblende mit einem sehr schmalen Spalt (ca. 0,1 mm) und durch geeignete Wahl des Abstandes der Blende über dem linearen Sensorarray zur Erreichung großer Einfallswinkel des Sonnenlichts aus. Auch hier ist - wie bei allen digitalen Sonnensensoren durch die Verwendung von Vielelementdetektoren (CCD) - die Auswerteelektronik sehr aufwändig.

Aus der Patentschrift US 55 72 316 ist ein analoger Sonnensensor bekannt geworden, bei dem ein ebenfalls sehr schmaler Spalt lateral auf eine langgestreckte Rechteckfläche, die aus zwei separaten dreieckigen Photodiodenflächen besteht, projiziert wird. Verlagert sich das Spaltabbild, so ändern sich die auf jede der beiden Photodiodenflächen entfallenden Anteile der Spaltlänge und damit die erzeugten Photonenströme gegenläufig zueinander, so dass die Differenz der Photonenströme ein Maß für den Einfallswinkel des Lichts ist.

Allen letztgenannten Sonnensensoren ist gemeinsam, dass sie sämtlich mit sehr schmalen Spaltbreiten arbeiten müssen, um eine hohe Auflösung des Einfallswinkels des Lichts zu erreichen, wodurch die auf das Detektorarray fallende Lichtmenge sehr beschränkt ist und die Messung durch Störgrößen leicht verfälscht werden kann.

Der Erfindung liegt die Aufgabe zugrunde, eine neue Möglichkeit zur Bestimmung des Einfallswinkels von Licht zu finden, die mit geringem Aufwand an Auswerteelektronik eine hohe Messgenauigkeit gewährleistet. Weiterhin soll eine geringe Anfälligkeit gegenüber Störlichtquellen und anderen Fehlersignalen erreicht werden.

Erfindungsgemäß wird die Aufgabe bei einer Anordnung zur Bestimmung des Einfallswinkels von Licht mit einem langgestreckten Detektorarray und einem Spalt zur Beleuchtung des Sensorarrays mit einem Lichtstreifen, wobei der Spalt orthogonal zu einer vorgegebenen Längsrichtung des Detektorarrays in einem definierten Abstand, der vor allem den maximal erfassbaren Einfallswinkel des Lichts vorgibt, über den lichtempfindlichen Flächen des Detektorarrays angeordnet ist, dadurch gelöst, dass das Detektorarray eine reihenförmige Anordnung mehrerer kongruenter Photodiodenflächen mit im wesentlichen gleicher Länge und Breite ist, wobei die Photodiodenflächen jeweils eine solche Größe aufweisen, dass bei Beleuchtung mit dem Lichtstreifen in einer Photodiodenfläche ein maximaler Photostrom, der einen Mindestbetrag zur Unterteilung in digitale Auflösungsstufen gewünschter Größe und Anzahl aufweist, erzeugt wird, und dass die Photodiodenflächen so aneinandergereiht sind und an deren Längsausdehnung die Breite des mittels des Spaltes erzeugten Lichtstreifens so angepasst ist, dass trotz lichtunempfindlicher Stege, die zur elektrischen Isolation benachbarter Photodiodenflächen notwendig sind, sich Anteile der lichtempfindlichen Photodiodenflächen in Längsrichtung des reihenförmigen Photodiodenarrays überlappen, wobei von dem Lichtstreifen zu jedem Zeitpunkt mindestens zwei Photodiodenflächen gleichzeitig einen signifikanten Photostrom liefern.

In einer vorteilhaften Gestaltung weist jede Photodiodenfläche erste parallele Kanten, die entlang von zwei Geraden parallel zur Längsrichtung des Photodiodenarrays ausgerichtet sind, sowie zweite parallele Kanten, die von der Orthogonalrichtung zu den ersten Kanten wesentlich verschieden sind, auf, wobei sich die ersten und zweiten parallelen Kanten schneiden und in Längsrichtung des Photodiodenarrays unterschiedlich positionierte Ecken einer Photodiodenfläche derart bilden, dass - in Längsrichtung des Photodiodenarrays betrachtet - eine erste vordere Ecke einer Photodiodenfläche vor einer letzten hinteren Ecke der vorhergehenden Photodiodenfläche angeordnet ist. Dabei ist der Grad der Überlappung der Photodiodenflächen unterschiedlich wählbar. Zweckmäßig ist die erste vordere Ecke einer Photodiodenfläche vor der ersten hinteren Ecke der vorhergehenden Photodiodenfläche angeordnet.

Die Überlappung der Photodiodenflächen in Längsrichtung des Photodiodenarrays lässt sich besonders vorteilhaft erreichen, wenn das Photodiodenarray aus mindestens zwei parallelen gleichartigen Reihen von Photodiodenflächen zusammengesetzt ist, wobei die Photodiodenreihen zueinander um einen Bruchteil des Mittenabstand der Photodiodenflächen versetzt angeordnet sind, so dass vorhergehende und aufeinanderfolgende Photodiodenflächen abwechselnd in den unterschiedlichen Reihen von Photodiodenflächen angeordnet sind und in Längsrichtung des Photodiodenarrays äquidistant verteilt sind .

Dabei werden Photodiodenflächen mit nicht orthogonalen Kanten so gestaltet, dass vorzugsweise die erste vordere Ecke einer Photodiodenfläche mit der zweiten vorderen Ecke der vorhergehenden Photodiodenfläche auf der gleichen Position bezüglich der Längsrichtung des Photodiodenarrays liegen, so dass es keine Signalsprünge gibt, wenn sich der Lichtstreifen über Stege zwischen den Photodiodenflächen hinwegbewegt.

Zur Realisierung der Überlappungen der vom Lichtstreifen beeinflussten Photodiodenflächen können geradlinig begrenzte Vierecke unterschiedlich gestaltet sein. Die Photodiodenflächen können zweckmäßig Trapeze sein, wobei die Trapeze kongruent und benachbarte Trapeze jeweils zueinander um 180° gedreht innerhalb des linearen Photodiodenarrays angeordnet sind.

Die Photodiodenflächen können auch vorteilhaft Parallelogramme sein, wobei die Parallelogramme jeweils mit einem parallelen Kantenpaar parallel zur Längsrichtung des Photodiodenarrays ausgerichtet sind. Vorzugsweise werden als Photodiodenflächen Rhomben gewählt.

Eine weitere Gestaltungsmöglichkeit der Photodiodenflächen ist die Form kongruenter stilisierter Pfeilspitzen, wobei die Pfeilspitzen gerade erste parallele Kanten in Längsrichtung des Photodiodenarrays sowie gewinkelte zweite parallele Kanten aufweisen.

Bei Verwendung eines mehrreihigen Photodiodenarrays können die Photodiodenflächen auch Rechtecke, vorzugsweise Quadrate, sein, wobei insbesondere bei dieser Variante ein relativ breiter Lichtstreifen mit gaußförmigem Intensitätsprofil vorausgesetzt werden sollte.

Die Spaltbreite wird zweckmäßig so gewählt, dass der auf dem Photodiodenarray abgebildete Lichtstreifen die Größenordnung der Längsausdehnung einer Photodiodenfläche aufweist.

Zur Auswertung der Lage des Lichtstreifens und damit zur Bestimmung des Einfallswinkels des Lichts werden vorteilhaft Photoströme nur von den Photodiodenflächen verwendet, die in Längsrichtung des Photodiodenarrays aufeinanderfolgend angeordnet sind und (ununterbrochen) über einer definierten Rauschschwelle liegende Signalpegel aufweisen, wobei, ausgehend von einer Photodiodenfläche mit dem größten Photostrom des Photodiodenarrays, aus einer vorgewählten Anzahl in der Umgebung dieser Photodiodenfläche mit größtem Photostrom der Schwerpunkt der Photoströme als Position der Schwerpunktlinie des Lichtstreifens bestimmbar ist.

Bei Verwendung eines einreihigen Photodiodenarrays ist die Anzahl der zur Schwerpunktberechnung herangezogenen Photodiodenflächen vorteilhaft auf drei beschränkt. Für ein zweireihiges Photodiodenarray beschränkt man die Anzahl der zur Schwerpunktberechnung herangezogenen Photodiodenflächen zweckmäßig auf fünf.

Werden mehrere parallele Reihen von Photodiodenflächen verwendet, ist es von Vorteil, wenn die Photodiodenreihen auch separat voneinander auswertbar sind, wobei die Reihen dann als redundante einreihige Photodiodenarrays vorgesehen sind. In vorteilhafter Weise werden mehrreihige Photodiodenarrays jedoch aus Gründen höherer Genauigkeit der Winkelauflösung zusammen ausgewertet, wobei die Messwerte der Photoströme der einzelnen Photodiodenflächen in der Reihenfolge ihrer Position entlang der Längsrichtung des Photodiodenarrays aus den unterschiedlichen Photodiodenreihen zusammengeführt (ggf. "verkämmt") werden müssen.

Zur Bestimmung des Einfallswinkels von Licht in zwei Raumwinkelkoordinaten sind zweckmäßig zwei gleichartige, separat ausgewertete Photodiodenarrays orthogonal zueinander auf einem Detektor-Chip angeordnet, wobei beiden Photodiodenarrays separate Spalte zur Erzeugung des Lichtstreifens, die ebenfalls orthogonal zueinander auf einer gemeinsamen Blendenplatte liegen, zugeordnet sind. Dabei werden Detektor-Chip und Blendenplatte vorteilhaft mittels derselben Technologie hergestellt, so dass nur noch ihre gegenseitige Ausrichtung die Genauigkeit der Photodiodenarrays in beiden Raumwinkeln beeinflussen und die Justagefehler minimiert werden.

Für die Bestimmung des Einfallswinkels von Sonnenlicht ist vorteilhaft mindestens ein zusätzlicher Einzeldetektor zum Erkennen des Vorhandenseins von Sonnenlicht (Sonnenpräsenzdetektor) auf dem Detektor-Chip vorhanden.

Zur Erhöhung der Messgenauigkeit der Photodiodenarrays kann auf dem Detektor-Chip mindestens ein zusätzlicher Einzeldetektor, der in gleicher Technologie und Flächengröße wie die Photodioden der reihenförmigen Arrays hergestellt und lichtundurchlässig abgedeckt ist, zur Erfassung des Dunkelstroms auf dem Detektor-Chip vorgesehen sein.

Die grundlegende Idee der Erfindung basiert auf der Überlegung, dass eine Anordnung zur Bestimmung des Einfallswinkels von Licht auf Basis einer Spaltabbildung auf ein lineares Detektorarray der elektronische Auswerteaufwand verringert werden soll, ohne die geforderte hohe Auflösung der Lage des vom Spalt abgebildeten Lichtstreifens zu verringern. Aus diesem Grunde wurde einem (gegenüber CCD-Zeilen) unempfindlicheren Photodiodenarray der Vorrang gegeben. Der dabei in Kauf genommene Nachteil geringerer Empfindlichkeit wird durch erfindungsgemäße Gestaltung linearer Photodiodenarrays kompensiert, indem die Photodiodenflächen ausreichend groß gestaltet sind, um einen hinreichend hohen Photostrom bei Beleuchtung mit dem Lichtstreifen zu erzielen.

Die mit der großen Ausdehnung der Photodiodenflächen einhergehende verringerte Auflösung der Lage des Lichtstreifens wird durch die Aufnahme der Photoströme als Analogsignale sowie durch eine "Überbrückung" der Stege zwischen den Photodiodenflächen, die zur elektronischen Isolation erforderlich sind, ausgeglichen. Diese Vermeidung von Signalausfällen an den Stegen zwischen den Photodiodenflächen wird gemäß der Erfindung durch eine Überlappung von Teilen benachbarter Photodiodenflächen erreicht, so dass bei jeder beliebigen Lage des Lichtstreifens mindestens zwei Photodiodenflächen gleichzeitig einen signifikanten Photostrom liefern. Dies ist durch spezielle Flächenformen, die gegenüber der Längsrichtung des Photodiodenarrays nicht orthogonal verlaufende Stege zulässt, und/ oder durch mehrere parallele Photodiodenreihen, die gegeneinander versetzte Schwerpunkte der Photodiodenflächen aufweisen, realisierbar. Die Vermeidung von Signalausfällen an den Stegen ist für die Auswertung der Analogsignale von besonderer Bedeutung, da Signalsprünge der Photoströme möglichst vollständig ausgeschlossen sein sollten, um Probleme der Übersteuerung und der Schwellbewertung des Rauschens der Photodioden zu verringern und somit Fehler bei der sehr einfach gehaltenen Signalauswertung zu minimieren.

Die erfindungsgemäße Anordnung gestattet es, den Einfallswinkel von Licht durch den Einsatz von Photodiodenarrays mit verringertem Aufwand an Auswerteelektronik bei Sicherung hoher Genauigkeit zu bestimmen. Weiterhin ist eine relativ große, an die Längsausdehnung der Photodiodenflächen angepasste Spaltbreite zulässig, die kombiniert mit einem einfachen Auswertealgorithmus zusätzlich eine geringere Anfälligkeit gegenüber Störlicht gewährleistet. Außerdem lässt sich die Erfindung vorteilhaft als analoger Sonnensensor mit orthogonalen Reihen von Photodiodenarrays auf einem gemeinsamen Chip photolithographisch fertigen und mit einheitlicher Spaltblendenmaske, die ebenfalls mittels photolithographischer Verfahren herstellbar ist, einfach justieren und kalibrieren.

Die Erfindung soll nachfolgend anhand von Ausführungsbeispielen näher beschrieben werden. Die Zeichnungen zeigen:

Fig. 1:    eine Prinzipdarstellung der erfindungsgemäßen Anordnung in Draufsicht und geschnittener Seitenansicht,

Fig. 2:    eine Gestaltung einer erfindungsgemäßen Photodiodenzeile mit Photodiodenflächen in Form von Parallelogrammen,

Fig. 3:    eine Art eines erfindungsgemäßen Photodiodenarrays mit Parallelogrammen als Photodiodenflächen,

Fig. 4:    eine zweireihige Variante eines erfindungsgemäßen Photodiodenarrays,

Fig. 5:    eine dreireihige Anordnung mit unterschiedlicher Orientierung der Reihen mit rhombusförmigen Photodiodenflächen,

Fig. 6:    eine Ausführung der Photodiodenflächen in Form stilisierter Pfeilspitzen,

Fig. 7:    eine Gestaltungsform der Photodiodenflächen als Reihe gegenläufig orientierter Trapeze,

Fig. 8:    eine zweireihige Anordnung von rechteckigen Photodiodenflächen mit verschobenen Flächenschwerpunkten sowie

Fig. 9:    eine vorteilhafte Gestaltung eines Detektor-Chips als Sonnensensor (mit Schnittdarstellung) .

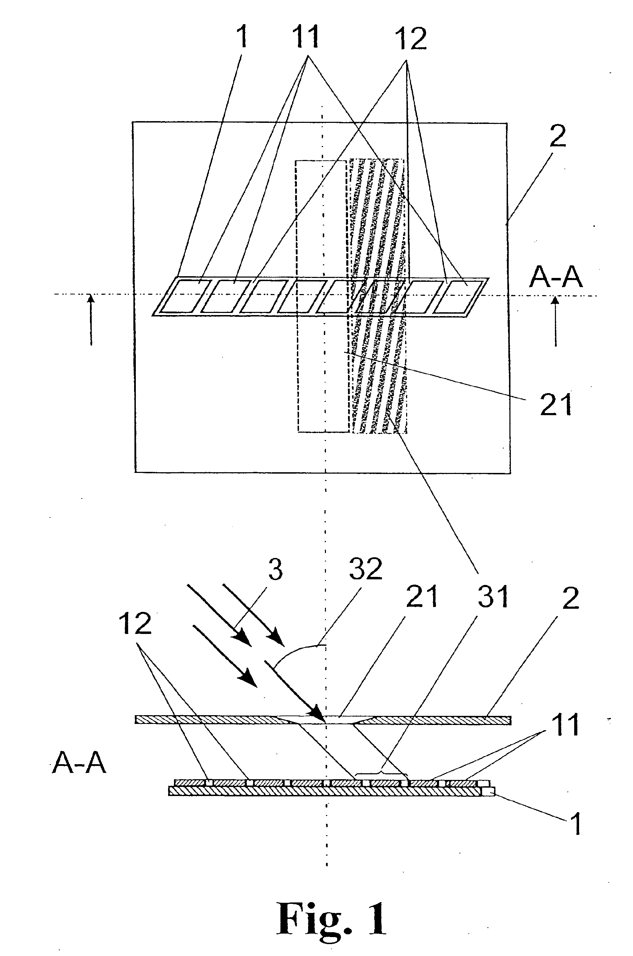

Die erfindungsgemäße Anordnung besteht - wie in Fig. 1 dargestellt - in ihrem Grundaufbau aus einem im wesentlichen linear ausgedehnten Photodiodenarray 1 mit Photodiodenflächen 11 sowie einer in definiertem Abstand darüber angeordneten Blendenplatte 2 mit einem Spalt 21 zum Durchlassen eines im wesentlichen parallelen Lichtbündels 3, dessen Einfallswinkel 32 bestimmt werden soll. Dabei ist der Spalt 21 - wie obere Draufsicht von Fig. 1 zeigt - gegenüber der Längsausdehnung des Photodiodenarrays 1 orthogonal ausgerichtet und kreuzt dieses mittig. Der Spalt 21 erzeugt auf dem Photodiodenarray 1 quer zu dessen Längsausdehnung einen Lichtstreifen 31, der in Abhängigkeit vom Einfallswinkel 32 des Lichtbündels 3 unterschiedliche Photodiodenflächen 11 beleuchtet. Die durch Auswertung der Photoströme des Photodiodenarrays 1 ermittelte Lage des Lichtstreifens 31 ist ein Maß für den Einfallswinkel 32 des Lichtbündels 3.

Das Photodiodenarray 1 zeichnet sich erfindungsgemäß dadurch aus, dass die einzelnen Detektorelemente relativ große Photodiodenflächen 11 sind und die zwischen den Photodiodenflächen 11 befindlichen Stege 12, die zur elektrischen Isolation (weitgehende Unterbindung des Übersprechens) der Photodiodenflächen 11 notwendig sind, so angeordnet werden, dass bei jeder beliebigen Lage des Lichtstreifens 31 mindestens zwei benachbarte Photodiodenflächen 11 gleichzeitig einen signifikanten Photostrom liefern.

Das bedeutet einerseits, dass der auf das Photodiodenarray 1 fallende Lichtstreifen 31 breit genug sein muss, um ständig mindestens zwei Photodiodenflächen 11 gleichzeitig zu einem erheblichen Teil zu beleuchten und somit - verglichen mit der Ermittlung des Einfallswinkels von Licht mittels CCD-Zeilensensoren - ein relativ breiter Spalt 21 zum Einsatz kommt. Dabei sind auch die Abmessungen der Photodiodenflächen 11 beachtlich, da diese aufgrund der (gegenüber CCD) wesentlich geringeren Empfindlichkeit von Photodioden deutlich größer ausfallen müssen, um Photoströme zu erzielen, die ein ausreichendes Signal-Rausch-Verhältnis aufweisen.

Andererseits wird die besagte gleichzeitige Beleuchtung mehrerer Photodiodenflächen 11 gemäß der Erfindung dadurch erreicht, dass sich lichtsensitive Bereiche von benachbarten Photodiodenflächen 11 in Richtung der Längsausdehnung des Photodiodenarrays 1 überlappen. Fig. 1 gibt dafür eine erste Möglichkeit an, indem die Photodiodenflächen 11 durch nicht orthogonale Stege 12 voneinander getrennt sind. Dazu ist es weiterhin von Bedeutung, dass die Photodiodenflächen 11 durch analoge Messung der Photoströme ausgewertet werden und zur Winkelberechnung eine Lagebestimmung der Mittel- oder Schwerpunktslinie 311 des Intensitätsprofils des Lichtstreifens 31 vorgenommen wird, um trotz der erheblich größeren Abmessungen der Photodiodenflächen 11 die Genauigkeit herkömmlicher Sensoren zur Bestimmung des Lichteinfallswinkels zu erreichen.

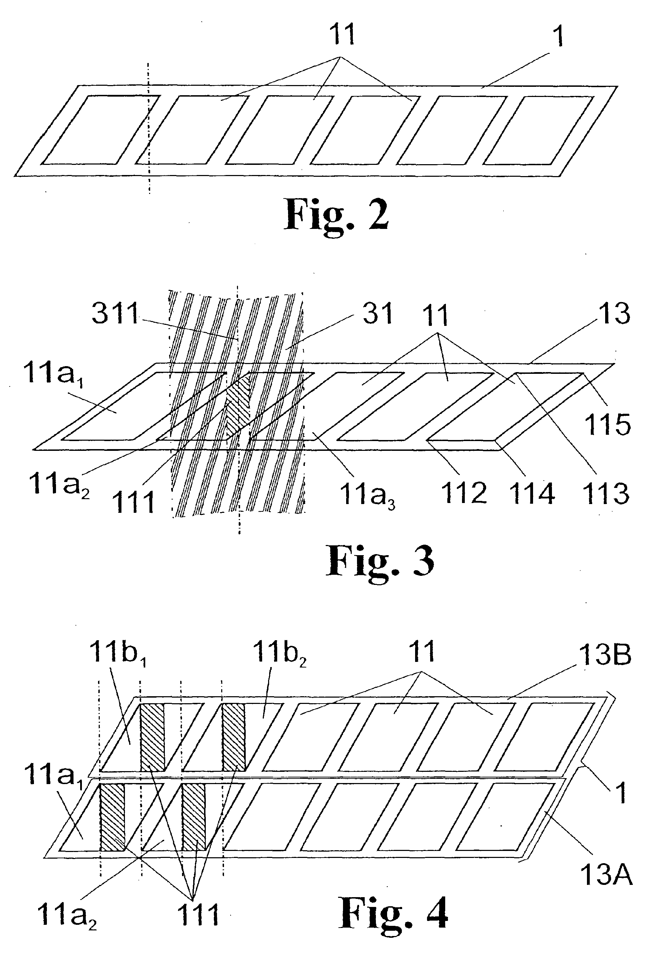

Anhand der unteren Schnittdarstellung von Fig. 1 (Schnitt entlang der Linie A-A der oben abgebildeten Draufsicht) ist weiterhin ersichtlich, dass die Blendenplatte 2 über den Photodiodenflächen 11 in einem definierten Abstand angeordnet ist, der außer der Wahl des maximalen Einfallswinkels 32 (z.B. $\geq \pm 64°$ bei einem Sonnensensor) auch einen wesentlichen Einfluss auf das Ausmaß der Lageänderung des Lichtstreifens 31 in Abhängigkeit vom Einfallswinkel 32 und damit auf die Winkelauflösung der erfindungsgemäßen Anordnung hat. Der Spalt 21 ist in der unteren Schnittzeichnung von Fig. 1 stilisiert als keilförmig berandet dargestellt, um den unbeschnittenen Durchlass des Lichtbündels 3 auch für große Einfallswinkel geometrisch zuzulassen. Tatsächlich wird die scharfkantige Berandung der Spaltblende 2 am Spalt 21 durch eine lichtundurchlässige Beschichtung an der Unterseite einer transparenten Trägerplatte realisiert, wobei der Spalt 21 durch mikrolithographische Techniken hergestellt wird.
Bezüglich der Form der Photodiodenflächen 11 und Stege 12 sind in den folgenden Figuren 2 bis 8 und den zugehörigen Beschreibungsteilen weitere Varianten und dazu jeweils genauere Erläuterungen angegeben.

Fig. 2 zeigt ein einreihiges Photodiodenarray 1 mit Photodiodenflächen 11 in Form von Parallelogrammen, die wie schon in Fig. 1 stilisiert dargestellt, einander überlappende Flächenanteile benachbarter Photodiodenflächen 11 aufweisen. Die (kongruenten) Parallelogramme sind auf einem einheitlichen Substrat so angebracht, dass alle Photodiodenflächen 11 jeweils mit einem Kantenpaar entlang zweier paralleler Geraden aufgereiht sind. Die orthogonale Strich-Punkt-Linie symbolisiert die Schwerpunktlinie 311 des Lichtstreifens 31. Der Lichtstreifen 31 ist, wie in Fig. 1 angedeutet, eher eine Rechteckfläche als eine eindimensionale Linie. Die Breite des Lichtstreifens 31 sollte zur sicheren Auslösung signifikanter Photoströme in mehreren Photodiodenflächen 11 etwas größer als die maximale Längsausdehnung einer Photodiodenfläche 11 sein. Dadurch werden bei der in Fig. 2 gewählten Konfiguration der Photodiodenflächen 11 für die meisten willkürlichen Positionen des Lichtstreifens 31 sogar drei Photodiodenflächen 11 einen Photostrom erzeugen, der über einer festzulegenden Rauschschwelle liegt.

In Fig. 3 ist die Parallelogrammform der Photodiodenflächen 11 soweit gesteckt worden, dass die erste vordere Ecke 112 einer Photodiodenfläche $11a_2$, in Richtung der Längsausdehnung des Photodiodenarrays 1 betrachtet, auf gleicher Höhe mit der zweiten vorderen Ecke 113 der vorhergehenden Photodiodenfläche $11a_1$ zu liegen kommt. Diese Konfiguration hat den Vorteil, dass infolge der Faltung der Intensitätsfunktion des Lichtstreifens 31 (die keine Rechteckfunktion, sondern nahezu eine Gaußverteilung ist) mit der Flächenfunktion des Parallelogramms im Zustand des maximalen Photostroms der hauptsächlich beleuchteten Photodiodenfläche $11a_2$ sowohl in einer vorhergehenden Photodiodenfläche $11a_1$ als auch in der nachfolgenden Photodiodenfläche $11a_3$ jeweils ein messbarer Photostrom vorhanden ist.
Wenn bei einer kontinuierlich rechtsläufigen Bewegung des Lichtstreifens 31 in Richtung der Längsausdehnung des Photodiodenarrays 1 die Schwerpunktlinie 311 des Lichtstreifens 31 den schraffierten Bereich 111 überstreicht, ändert sich der Photostrom der hauptsächlich beleuchteten Photodiodenfläche $11a_2$ nahezu nicht, da die Schwerpunktlinie 311 einen Bereich 111 konstanter Breite des Parallelogramms durchläuft. In der vorhergehenden Photodiodenfläche $11a_1$ wirkt sich dieselbe Verschiebung des Lichtstreifens 31 nach rechts jedoch sehr deutlich intensitätsmindernd aus, da sich infolge der schrägen Kante zwischen den hinteren Ecken 114 und 115 der Photodiodenfläche $11a_1$ ihr beleuchteter Flächenanteil (und damit ihr Photostrom) schneller verringert, als die differentielle Verschiebung des Lichtstreifens 31 dies allein bewirken würde. Derselbe Effekt tritt - allerdings mit umgekehrten Vorzeichen - in der der hauptsächlich beleuchteten Photodiodenfläche $11a_2$ folgenden Photodiodenfläche $11a_3$ ein. Hier bewirkt die ansteigende vordere Kante zwischen den zwei vorderen Ecken 112 und 113 eine schnelle Zunahme des Photostromes, da mit der stetigen Verschiebung des Lichtstreifens 31 zugleich die wirksame Höhe der Photodiodenfläche $11a_3$ ebenfalls wächst. In Abweichung zu Fig. 1, bei der die Breite des Lichtstreifens 31 etwas größer als die Längsausdehnung der Photodiodenflächen 11 gewählt wurde, kann der Lichtstreifen in Fig. 3 infolge der stärkeren Überlappung der Photodiodenflächen 11 etwas schmaler ausfallen, ohne dass es zu irgend einem Zeitpunkt an den in mehreren Photodiodenflächen 11 gleichzeitig notwendigen signifikanten Photoströmen mangeln könnte.

Dieser Umstand tritt noch deutlicher bei einem zweireihigen Photodiodenarray 1 gemäß Fig. 4 hervor. Hier sind zwei Reihen 13A und 13B von parallelogrammförmigen Photodiodenflächen 11 so angeordnet, dass die Bereiche 111 mit konstanter Breite jeweils von der ansteigenden Kante zwischen der ersten und der zweiten vorderen Ecke 112 bzw. 113 (vgl. Eckenbezeichnung der Parallelogramme gemäß Fig. 3) der nächsten Photodiodenfläche 11 überlappt werden. Das heißt im konkreten Fall von Fig. 4, dass die zweite vordere Ecke 113 der ersten Photodiodenfläche $11a_1$ der Photodiodenreihe 13A bezüglich der Längsrichtung des Photodiodenarrays 1 auf gleicher Höhe wie die erste vordere Ecke 112 der ersten Photodiodenfläche $11b_1$ der zweiten Photodiodenreihe 13B liegt. Die zweite vordere Ecke 113 der in der zweiten Photodiodenreihe 13B liegenden ersten Photodiodenfläche $11b_1$ fällt dann wiederum mit der ersten vorderen Ecke 112 der in der ersten Photodiodenreihe 13A liegenden zweiten Photodiodenfläche $11a_2$ "zusammen".

Wenn nun die Schwerpunktlinie 311 des Lichtstreifens 31 die zweite vordere Ecke 113 der Photodiodenfläche $11a_2$ erreicht, liegt sie gleichzeitig auf Höhe der ersten vorderen Ecke 112 der zweiten Photodiodenfläche $11b_2$ der Photodiodenreihe 13B. D.h. wenn der Photostrom in der ersten Photodiodenfläche $11a_1$ sein Maximum erreicht und sich infolge konstanter Flächenbreite (Bereich 111) vorerst nicht mehr ändert, nimmt der Photostrom in der zweiten Photodiodenfläche $11b_1$ deutlich zu. Ist das Photostrommaximum in der Photodiodenfläche $11b_1$ erreicht, ändert sich der Photostrom in der nächsten Photodiodenfläche $11a_2$ und wenn letztere ihren maximalen Photostrom abgibt, beginnt der Photostrom in der vierten Photodiodenfläche $11b_2$ signifikant zu steigen. Ein entgegengesetztes Verhalten der Photoströme zeichnet sich in analoger Art und Weise auch an den hinteren Kanten zwischen den Ecken 114 und 115 der Photodiodenflächen 11 ab. Damit ergibt sich an jeder beliebigen Stelle in Längsrichtung des Photodiodenarrays 1 in wenigstens einer Photodiode 11 ein signifikant mit der Verschiebung des Lichtstreifens 31 ansteigender oder abfallender Photostrom (als analoger Messwert, der nachfolgend in Digitalstufen definierter Größe umsetzbar ist), so dass die Schwerpunktlinie 311 des Lichtstreifens 31 sehr genau bestimmt werden kann. Bei Auswertung der Photoströme eines "Pakets" von signifikanten Photoströmen aufeinanderfolgender Photodiodenflächen 11 - in diesem Fall abwechselnd aus den Photodiodenreihen 13A und 13B - wird somit die Genauigkeit und Zuverlässigkeit der Lagebestimmung des Lichtstreifens 31 deutlich erhöht. Außerdem können durch die "Paketauswertung" von ausschließlich den Photodiodenflächen 11, die aufeinanderfolgend hinreichend große Photoströme aufweisen, auf einfache Weise auch Störlichtreflexe o.ä. ausgesondert werden, die sonst die Berechnung der Lage des Lichtstreifens 31 verfälschen würden.

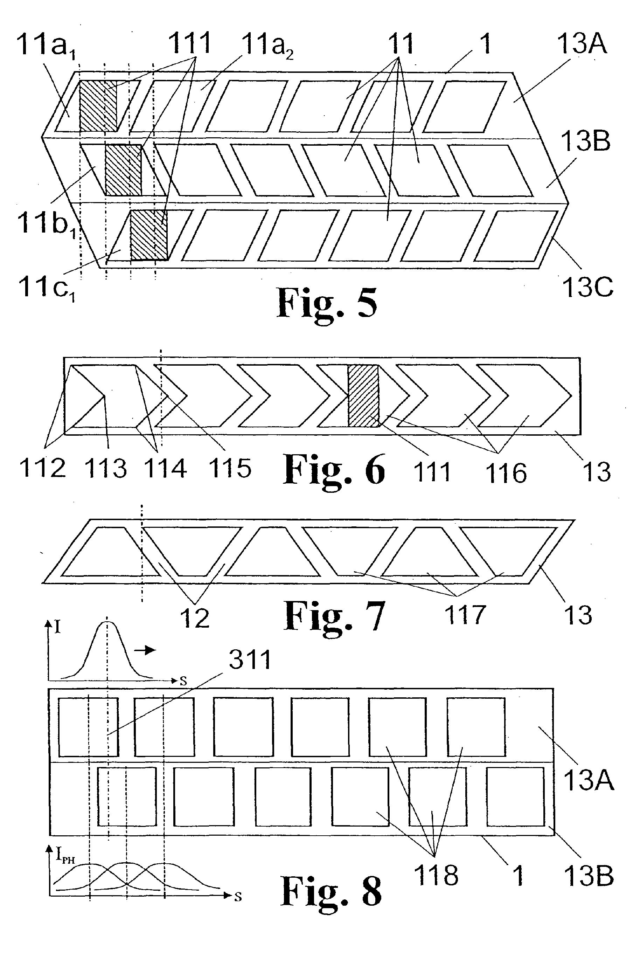

In Fig. 5 ist die Gestaltungs- und Funktionsart von Fig. 4 nochmals variiert in einer dreireihigen Ausführung des Photodiodenarrays 1 dargestellt. Die Besonderheit liegt hier in der Verwendung von rhombusförmigen Photodiodenflächen 11 und in einer abwechselnden Richtung der schrägen Kanten der Photodiodenreihe 13B gegenüber den benachbarten Reihen 13A und 13C. Die Neigung der schrägen Kante zwischen den ersten und zweiten vorderen Ecken 112 bzw. 113 ist bei allen Rhomben gleich und allein vom Kantenmaß der Rhomben sowie von der Anzahl (hier: drei) der Photodiodenreihen 13 abhängig. Die Schräglage der Kanten ist aber nach derselben Bedingung wie in Fig. 4 dadurch bestimmt, dass die erste vordere Ecke 112 der Photodiodenfläche $11b_1$ auf gleicher Höhe mit der zweiten vorderen Ecke 113 der vorhergehenden Photodiodenfläche $11a_1$ liegt und die erste vordere Ecke 112 der Photodiodenfläche $11c_1$ mit der zweiten vorderen Ecke 113 der Photodiodenfläche $11b_1$ "zusammenfällt". Die zweite vordere Ecke 113 der Photodiodenfläche $11c_1$ der dritten Photodiodenreihe 13C liegt dann wiederum mit der ersten vorderen Ecke 112 der nächsten Photodiodenfläche $11a_2$ in der ersten Photodiodenreihe 13A auf derselben Linie (dritte Strich-Punkt-Linie von links). Weiterhin ist der stilisierten Darstellung von Fig. 5 zu entnehmen, dass die Möglichkeit besteht, alle Photodiodenreihen 13A bis 13C auf einem Chip auszuführen, wobei sich die geringe Neigung der schrägen Kanten der Photodiodenflächen 11 positiv auswirkt, da die Bereiche 111 gleicher Breite (und damit nahezu konstanten Photostroms) jeweils durch die schrägen vorderen Kanten zweier nachfolgender Photodiodenflächen (z.B. $11b_1$ und $11c_1$ gegenüber dem Bereich 111 der Photodiodenfläche $11a_1$) überlappt werden. Es gibt also bei jeder beliebigen Lage (der Schwerpunktlinie 311) des Lichtstreifens 31, bei der in einer hauptsächlich beleuchteten Photodiodenfläche 11 über die Länge des Bereiches 111 hinweg infolge des Erreichens ihres maximalen Photostromes eine exakte Positionsbestimmung des Lichtstreifens 31 nicht möglich wäre, benachbarte Photodiodenflächen 11, die einen signifikanten, empfindlich ortsabhängigen Photostrom liefern, der eine genaue Lageberechnung des Lichtstreifens 31 gestattet.

In den Fig. 6 und 7 sind weitere Gestaltungsmöglichkeiten für Photodiodenreihen 13 angegeben, die sowohl als einreihige als auch als mehrreihige Photodiodenarrays 1 eingesetzt werden können.

Dabei stellt Fig. 6 eine Variante der Formgebung für die Photodiodenflächen 11 dar, die sich durch eine besonders starke Ortsabhängigkeit der Photoströme auszeichnet und bei der sich die Bereiche 111 mit gleicher Breite der Photodiodenflächen 11 besonders einfach gering ausführen lassen. Die Photodiodenflächen 11 sind hierbei in Form stilisierter Pfeilspitzen 116 gestaltet, wobei es erste vordere Ecken 112 und erste hintere Ecken 114 paarweise gibt, zwischen denen sich parallele Kanten befinden, die parallel zur Längsrichtung der Photodiodenreihe 13 ausgerichtet sind. Zwischen den beiden ersten vorderen Ecken 112 wie auch zwischen den beiden ersten hinteren Ecken 114 befinden sich jeweils einfach gewinkelte Kanten, die zueinander wiederum parallel ausgerichtet sind und die an ihrer Knickstelle die zweite vordere Ecke 113 bzw. die zweite hintere Ecke 115 der Pfeilspitzenfläche 116 bilden.

Bewegt sich die Schwerpunktlinie 311 des (hier nicht dargestellten) Lichtstreifens 31 über den Bereich der gewinkelten Kanten zwischen den ersten hinteren Ecken 114 einer Pfeilspitzenfläche 116 und die zweite vordere Ecke 113 der folgenden Pfeilspitzenfläche 116, so ergibt sich in beiden Pfeilspitzenflächen 116 eine hochempfindliche Änderung des Photostromes, wobei sich im Bereich des Steges 12 lediglich eine leichte Verringerung des Gesamtphotostromes bemerkbar macht. Der Bereich 111 mit gleicher Breite der Pfeilspitzenfläche 116 lässt sich bei dieser Ausführungsform nahezu beliebig kurz gestalten, um die unempfindlichen Anteile der Photodiodenreihe 13 möglichst klein zu halten. Letztere lassen sich aber auch durch Einsatz einer zweiten, verschobenen Photodiodenreihe 13 (analog zur Vorgehensweise bei der Parallelogramm- oder Rhombusform der Photodiodenflächen 11) sensibilisieren, indem bezüglich des Photodiodenarrays 1 aufeinanderfolgende Pfeilspitzen 116 ebenfalls wechselweise in unterschiedlichen Photodiodenreihen 13 angeordnet werden.

Fig. 7 stellt eine zur Parallelogrammform gleichwertige Gestaltung der Photodiodenflächen 11 in Form von Trapezen 117 dar. Hierbei sind lediglich die Stege 12 nicht wie bei den Parallelogrammen gleichgerichtet und parallel, sondern abwechselnd entgegengesetzt gegenüber der Orthogonalen zur Längsrichtung der Photodiodenreihe 13 angeordnet. Das Prinzip der Überlappung der Photodiodenflächen 11 bleibt bei den Trapezen 117 in Art, Maß der Schrägstellung der Stege 12 und Auswertungsmethode völlig identisch mit den Ausführungen zu Fig. 2 bis 4.

Eine wesentlich abgewandelte Variante des Erfindungsprinzips ist in Fig. 8 dargestellt. Diese Ausführungsart ist ausschließlich in mehrreihigen Photodiodenarrays 1 anwendbar. Der Einfachheit halber wurde hier zur Erläuterung das zweireihige Photodiodenarray 1 herangezogen. Im Gegensatz zu allen bisher beschriebenen Ausführungsformen wird das Photodiodenarray 1 in diesem Fall mit rechteckigen, hier vorzugsweise quadratischen Photodiodenflächen 118 hergestellt. Letztere sind bei einem zweireihigen Photodiodenarray 1 so angeordnet, dass die Flächenschwerpunkte der photoempfindlichen Rechteckflächen 118 jeweils abwechselnd in den Photodiodenreihen 13A und 13B liegen und somit der Flächenschwerpunkt einer jeden Rechteckfläche 118 aus der Reihe 13B auf gleicher Höhe mit der Mitte eines Steges 12 in der Photodiodenreihe 13A liegt. Bei dieser Form der Photodiodenflächen 11 als Rechteckflächen 118 ist zwar nicht der oben beschriebene Flächenzuwachs vorhanden, der zu einem zusätzlichen Anstieg des Photostromes bei einer Lageverschiebung des Lichtstreifens 31 führt, dennoch funktioniert das erfindungsgemäße Prinzip wegen des realen, nicht rechteckförmigen Intensitätsprofils des Lichtstreifens 31. Ein solches Intensitätsprofil ist in Fig. 8 über dem zweireihigen Photodiodenarray 1 schematisch dargestellt. Es entspricht näherungsweise einer Gauß'schen Glockenkurve. Dadurch ergibt sich bei der Faltung der Intensitätsfunktion des Lichtstreifens 31 mit der Flächenfunktion der Rechteckflächen 118 (in sehr ähnlicher Weise wie bei den obigen nicht orthogonalen Formen der Photodiodenflächen 11) nur ein geringfügiger Signalabfall in den Bereichen der Stege 12 sowie ein gegenüber dem Intensitätsprofil des Lichtstreifens 31 abgeflachter Verlauf der Funktion der Photoströme in Abhängigkeit vom Ort s der Schwerpunktlinie 311 des Lichtstreifens 31. Dieser Sachverhalt ist in Fig. 8 unterhalb des dargestellten Photodiodenarrays 1 in einer schematischen Grafik der Photoströme $I_{PH}$ unter Zuordnung (gestrichelte Linien) zu den Flächenschwerpunkten der ersten drei aufeinanderfolgenden Rechteckflächen 118 als Funktion des Ortes s entlang des Photodiodenarrays 1 dargestellt, wobei die Messwerte der Photoströme abwechselnd aus den Photodiodenreihen 13A und 13B zusammengeführt werden.

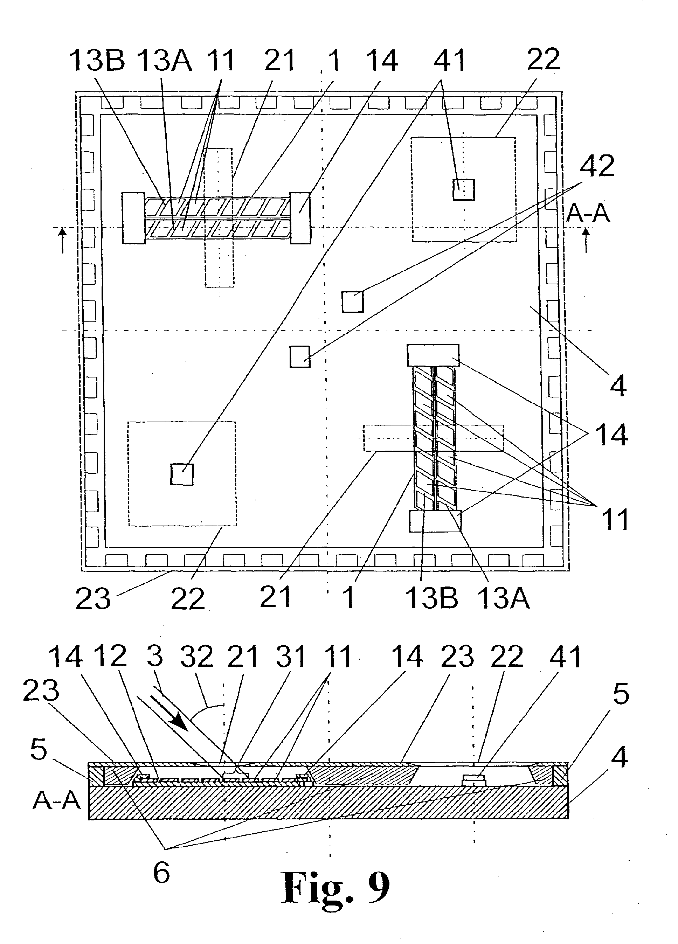

Die Anwendung der Erfindung in einem voll funktionstüchtigen Sonnensensor wird anhand der Fig. 9 gezeigt und nachfolgend erläutert. Ohne Beschränkung der Allgemeinheit wird in diesem Ausführungsbeispiel davon ausgegangen, dass die Richtung des einfallenden Lichts bei einem Sonnensensor im allgemeinen in zwei Winkelkoordinaten des Raumes erfolgen soll, und zwar separat und unabhängig voneinander.

Zu diesem Zweck sind - wie in Fig. 9 dargestellt - zwei separate erfindungsgemäße Anordnungen auf einem einheitlichen Chip 4 orthogonal zueinander angeordnet. Dies erfolgt zweckmäßig in einem einheitlichen photolithographischen Prozess, wodurch eine besonders hohe Genauigkeit der Lagebeziehung der einzelnen Photodiodenarrays 1 erzielt wird, so dass bei der Montage des Sonnensensors eine Justierung der Photodiodenarrays 1 zueinander entfällt. Stellt man außerdem die Spalte 21 für die beiden separaten Photodiodenarrays 1 auf einer gemeinsamen Blendenplatte 23 mittels photolithographischer Techniken her, sind auch die Spalte 21 bezüglich ihrer Abmessungen und ihrer Lage zueinander hochgenau eingestellt, so dass nur noch die gemeinsame Blendenplatte 23 gegenüber dem einheitlichen Chip 4 justiert werden muss.

Der Chip 4 ist bei einer vorzugsweise quadratischen Grundfläche in vier Quadranten unterteilt, wobei die beiden Photodiodenarrays 1 im zweiten und vierten Quadranten so angeordnet sind, dass sie sich bei 90°-Drehung um das Zentrum des Chips 4 ineinander überführen lassen. Zur Komplettierung der einwandfreien Funktion des Sonnensensors sind im ersten und dritten Quadranten des Chips 4 weitere Detektoren angeordnet. Das sind jeweils ein Sonnenpräsenzdetektor 41 und ein Dunkelstromdetektor 42, wobei die paarweise Anordnung allein der Redundanz dient.

Der Dunkelstromdetektor 42, der bezüglich seines Schichtaufbaus und seines Flächeninhalts mit jeder der Photodiodenflächen 11 in den Photodiodenarrays 1 übereinstimmt (gleicher Herstellungsprozess), ist vollständig abgedunkelt. Der sichere Ausschluss von Licht wird einerseits durch eine metallische Schicht direkt auf der photoempfindlichen Fläche und zusätzlich durch Abdeckung mit der an dieser Stelle vollständig geschlossenen Blendenplatte 23 erreicht. Die Dunkelstromdetektoren 42 sind deshalb nahe dem Zentrum des Chips 4 angeordnet.

Die zwei redundanten Sonnenpräsenzdetektoren 41 dienen der Feststellung, ob zur Auswertung der Photodiodenarrays 1 überhaupt Sonnenlicht vorhanden ist, und sind diametral entgegengesetzt im ersten und dritten Quadranten des Chips 4 so weit wie möglich außen angeordnet, da sie jeweils ein großes Fenster 22 in der gemeinsamen Blendenplatte 23 benötigen und die übrigen Detektoren (Photodiodenarrays 1 und Dunkelstromdetektoren 42) auch im ungünstigsten Fall nicht mit Streulicht beeinflusst werden dürfen. Der Sonnenpräsenzdetektor 41 (mit vorzugsweise quadratischer, aber gegenüber jeder Photodiodenfläche 11 in jedem Fall inhaltsgleicher Fläche) erfordert zur Sicherung eines großen Einfallswinkels 32 des Sonnenlichts, wie er für die messenden Photodiodenarrays 1 vorgegeben ist (hier mit ± 64° angenommen), in der gemeinsamen Blendenplatte 23 ein Fenster 22 erheblicher Größe, bei dem das einfallende Licht mit einer Separationsscheibe 6 - wie man aus der unteren Schnittdarstellung von Fig. 9 erkennen kann - sicher von den Lichtöffnungen (Spalte 21) der Photodiodenarrays 1 getrennt wird. Die Separationsscheibe 6 schafft auf diese Weise für jeden der Detektoren (zwei Photodiodenarrays 1 und zwei Sonnenpräsenzdetektoren 41) separate Lichtbuchten, die eine gegenseitige Beeinflussung der Detektoren (auch gegenüber den Dunkelstromdetektoren 42) unterbinden.

Die im zweiten und vierten Quadranten des Chips 4 angeordneten Photodiodenarrays 1 sind jeweils zweireihig ausgebildet. Die Anordnung der Photodiodenreihen 13A und 13B ist dabei, genauso wie bereits zu Fig. 4 beschrieben, vorgenommen worden. Die ersten und die letzten parallelogrammförmigen Photodiodenflächen 11 sind durch eine ebenfalls photolithographisch aufgebrachte Abdeckschicht 14 soweit abgedeckt, dass bei maximal zulässigem Einfallswinkel 32 des durch den Spalt 21 eintretenden Lichtbündels 3 der Lichtstreifen 31 bis an diese orthogonal zur Längsausdehnung des Photodiodenarrays 1 angelegte Abdeckschicht 14 heranreicht.

Diese Teilabschattung der Anfangs- und Endflächen ist aus zwei Gründen sinnvoll. Zum einen wird durch die photolithographische Herstellung vollkommen kongruenter Photodiodenflächen 11 (auch der Anfangs- und Endflächen) erreicht, dass alle Photodiodenflächen 11 nahezu denselben Dunkelstrom aufweisen, so dass dieser in der Regel nicht zusätzlich für jedes Element der Photodiodenreihen 13A und 13B gesondert korrigiert werden muss (Vereinfachung der Auswerteelektronik). Zum anderen unterbindet die Abdeckschicht 14 jegliche Möglichkeit, dass bei kleinen Lichteinfallswinkeln 32 die eigentlich nicht vom Lichtstreifen 31 beleuchteten Flächenanteile der äußeren Photodiodenflächen 11 durch Mehrfachreflexionen oder Streulicht fehlerhaft einen erhöhten Photostrom erzeugen.

Das Gesichtsfeld (d.h. der maximale Einfallswinkel 32 des Lichtbündels 3) wird für jedes Photodiodenarray 1 durch den Abstand zwischen der lichtempfindlichen Oberfläche der Photodiodenflächen 11 und dem Spalt 21, d.h. der beschichteten Unterseite der gemeinsamen Blendenplatte 23 bestimmt. Zu diesem Zweck ist ein genau dimensionierter Abstandshalter 5 als Rahmen oder Ring im Randbereich des Chips 4 des Sonnensensors um die Gesamtheit der Detektoren 1, 41 und 42 herum vorhanden. Er kann zur Stabilisierung zusätzliche Stützstellen im Mittelbereich des Chips 4 aufweisen. Durch Vergrößerung der Höhe dieses Abstandshalters 5 kann die Genauigkeit der Auflösung des Einfallwinkels 32 erhöht werden, wodurch sich jedoch das Gesichtsfeld der Photodiodenarrays 1 verringert.

Mit Hilfe des Spaltes 21 wird auf dem Photodiodenarray 1 ein hinreichend breiter Lichtstreifen 31 (mit einer Breite, die - wie in Fig. 1 dargestellt - etwas größer als die vollständige Längsausdehnung einer Photodiodenfläche 11 ist) abgebildet. Der Lichtstreifen 31 bewirkt bei der gewählten Struktur der Photodiodenarrays 1 (Doppelreihe parallelogrammförmiger Elemente) in einer begrenzten Zahl von Photodiodenflächen 11 Photoströme unterschiedlicher Stärke. Wenn sich die Lage des Lichtstreifens 31 verändert, ändern sich die Photoströme stetig und signifikant und lassen bei geeigneter Wahl des Auswertealgorithmus einen sehr genauen Schluss auf die Position des Lichtstreifens 31 zu. Die geringe Zahl der Photodiodenflächen 11 innerhalb einer Photodiodenreihe 13 - in diesem Beispiel acht - erlaubt eine sehr einfache Signalverarbeitungselektronik, sichert aber durch die Struktur der Photodiodenarrays 1 eine ausreichend hohe Genauigkeit der Lagebestimmung des Lichtstreifens 31 und damit der Bestimmung des Einfallswinkels 32 eines von der Sonne einfallenden Lichtbündels 3.

Aus der Struktur des Photodiodenarrays 1 resultiert, wenn der Lichtstreifen 31 sich in Längsrichtung über das Photodiodenarray 1 bewegt, ein stetiger Verlauf (ohne Signalsprünge) der Photoströme der Photodiodenflächen 11. Der Verlauf der Photoströme gleicht einer Gauß'schen Glockenkurve und ermöglicht bei Kompensation der Dunkelströme (mittels der Vergleichsströme der Dunkelstromdioden 42) die Anwendung eines Schwerpunktalgorithmus. Danach ergibt sich bei der Auswertung der Photoströme der zwei Photodiodenreihen 13A und 13B der Einfallswinkel 32 (in den folgenden Gleichungen mit $\alpha$ bezeichnet) zu

$$\alpha_{A,B} = \arctan\left(\frac{\sum\limits_{i=1}^{k} f_{ai} \cdot s_{ai} + \sum\limits_{j=1}^{k} f_{bj} \cdot s_{bj}}{h \cdot \left(\sum\limits_{i=1}^{k} f_{ai} + \sum\limits_{j=1}^{k} f_{bj}\right)}\right), \qquad (1)$$

wobei die Anzahl k der Photodiodenflächen 11 je Photodiodenreihe 13 in diesem Beispiel mit k=8 anzusetzen ist. Die Funktionswerte $f_{ai}$ sowie $f_{bj}$ stehen für die gemessenen Photoströme $I_{PH}$ und $s_{ai}$ bzw. $s_{bj}$ sind die Schwerpunktabstände der einzelnen Photodiodenflächen 11 der Photodiodenreihen 13A bzw. 13B. Für die Werte $f_{ai}$ sowie $f_{bj}$ können aber auch die Spannung oder andere dem Photostrom $I_{PH}$ proportionale Messsignale der Photodiodenflächen 11 eingesetzt werden. Der im Nenner der Arguments der Winkelfunktion stehende Faktor h bezeichnet den Abstand zwischen den Photodiodenflächen 11 und der Blendenplatte 23 (d.h. den tatsächlichen Abstand des Spaltes 21 vom Photodiodenarray 1), der die Genauigkeit der Winkelauflösung sowie das Gesichtsfeld des Sonnensensors, wie bereits oben erläutert, bestimmt.

Das Photodiodenarray 1 kann trotz der zweireihigen Struktur auch einreihig betrieben werden. Das bedeutet, dass entweder die Photodiodenreihe 13A oder die Photodiodenreihe 13B allein ausgewertet wird und die jeweils andere Reihe 13B bzw. 13A als redundantes Zeilenarray fungiert. Wenn nur eine der Photodiodenreihen 13A oder 13B zur Berechnung des Einfallswinkels 32 ausgewertet werden soll, ergeben sich die Gleichungen

$$\alpha_A = \arctan\left(\frac{\sum_{i=1}^{k} f_{ai} \cdot s_{ai}}{h \cdot \sum_{j=1}^{k} f_{ai}}\right) \qquad (2)$$

für die Photodiodenreihe 13A und

$$\alpha_B = \arctan\left(\frac{\sum_{j=1}^{k} f_{bj} \cdot s_{bj}}{h \cdot \sum_{j=1}^{k} f_{bj}}\right) \qquad (3)$$

für die Photodiodenreihe 13B.

Optional können auch aus beiden Photodiodenreihen 13 gleichzeitig unabhängig die Lage des Lichtstreifens 31 berechnet und die Ergebnisse gemittelt werden.

Gegenüber dem zweireihigen Betrieb der Photodiodenarrays 1, der eine sehr hohe Genauigkeit liefert, ist beim einreihigen Betrieb die erzielbare Genauigkeit geringer, aber häufig - zumindest bei der speziellen Form der nicht orthogonalen Photodiodenflächen 11 (hier: Parallelogramme) - völlig ausreichend.

Der sehr einfache Schwerpunktalgorithmus nach den Gleichungen (1) bis (3) ist eigentlich nur dann zuverlässig für die Bestimmung des Lichteinfallswinkels anwendbar, wenn neben einer Dunkelstromkompensation sichergestellt werden kann, dass keine andere als die gewünschte Lichtquelle das Photodiodenarray 1 trifft. Das ist bei einem Sonnensensor regelmäßig nicht der Fall.

Deshalb empfiehlt es sich, den Algorithmus durch ein Schwerpunktverfahren mit reduziertem Einzugsbereich zu modifizieren. Bei diesem Verfahren wird aus den gelieferten Photoströmen zunächst die Photodiodenfläche 11 mit dem maximalen Photostrom bestimmt. Dann werden von höchstens den zwei benachbarten Photodiodenflächen 11 die Photoströme ermittelt und anschließend die Photoströme von 4 oder 5 um die Photodiodenfläche 11 mit dem maximalen Photostrom des Arrays 1 gelegenen Photodiodenflächen 11 zur Ermittlung der Lage des Schwerpunktes des Lichtstreifens 31 herangezogen. Dieser Algorithmus ist sowohl für den einreihigen als auch für den zweireihigen Betrieb der Photodiodenarrays 1 anwendbar. Die Unterschiede sind in der nachfolgenden Übersicht zusammengestellt.

|  | einreihiger Betrieb | zweireihiger Betrieb |
|---|---|---|
| maximaler systematischer Fehler bei einem Winkelbereich von $\pm 64°$ | $\pm(6 \cdot 10^{-2})°$ | $\pm(5 \cdot 10^{-4})°$ |
| maximaler systematischer Fehler bei einem Einfallswinkelbereich von $\pm 64°$ und einem Dunkelstromverhältnis von $10^{-3}$ ohne Dunkelstromkompensation | $\pm 0,1°$ | $\pm(2,2 \cdot 10^{-3})°$ |
| Anzahl auszuwertender Photodiodenflächen 11 bei begrenztem Einzugsbereich | 2 - 3 | 4 - 5 |

Das in der Übersicht erwähnte Dunkelstromverhältnis gibt an, wie hoch der Dunkelstrom im Verhältnis zum maximalen Photostrom bei voller Beleuchtung einer Photodiodenfläche 11 ist. Mit dem modifizierten Schwerpunktalgorithmus mit begrenztem Einzugsbereich liefert die Anordnung gemäß der Erfindung neben der angestrebten hohen Genauigkeit auch eine hohe Zuverlässigkeit, die beim einreihigen Betrieb der zweireihig aufgebauten Photodiodenarrays 1 infolge der redundanten Messwerterfassung der Photodiodenreihen 13 weiter erhöht werden kann.

Verwendete Bezugszeichen

| | |
|---|---|
| 1 | Photodiodenarray |
| 11 | Photodiodenfläche |
| $11a_i$; $11b_i$; $11c_i$ | vorhergehende/aufeinanderfolgende Photodiodenflächen |
| 111 | Bereich gleicher Breite |
| 112, 113 | erste, zweite vordere Ecke |
| 114, 115 | erste, zweite hintere Ecke |
| 116 | Pfeilspitze |
| 117 | Trapez |
| 118 | Rechteck |
| 12 | Steg |
| 13, 13A, 13B, 13C | Photodiodenreihe |
| 14 | Abdeckschicht |

| | |
|---|---|
| 2 | Blendenplatte |
| 21 | Spalt |
| 22 | Fenster |
| 23 | gemeinsame Blendenplatte |

| | |
|---|---|
| 3 | Lichtbündel |
| 31 | Lichtstreifen |
| 311 | Schwerpunktlinie (des Lichtstreifens) |
| 32 | Einfallswinkel |

| | |
|---|---|
| 4 | Chip |
| 41 | Sonnenpräsenzdetektor |
| 42 | Dunkelstromdetektor |

| | |
|---|---|
| 5 | Abstandshalter |

| | |
|---|---|
| 6 | Separationsscheibe |

| | |
|---|---|
| I | Intensität |
| $I_{PH}$ | Photostrom |
| s | Ort |

**Patentansprüche**

**1.** Anordnung zur Bestimmung des Einfallswinkels von Licht mit einem langgestreckten Sensorarray und einem Spalt zur Beleuchtung des Sensorarrays mit einem Lichtstreifen, wobei der Spalt orthogonal zu einer vorgegebenen Längsrichtung des Sensorarrays in einem definierten Abstand, der vor allem den erfassbaren maximalen Einfallswinkel des Lichts vorgibt, über den lichtempfindlichen Flächen des Sensorarrays angeordnet ist, **dadurch gekennzeichnet, dass**

- das Sensorarray eine reihenförmige Anordnung mehrerer kongruenter Photodiodenflächen (11) mit im wesentlichen gleicher Länge und Breite ist, wobei die Photodiodenflächen (11) jeweils eine solche Größe aufweisen, dass bei Beleuchtung mit dem Lichtstreifen (31) in einer Photodiodenfläche (11) ein maximaler Photostrom, der einen Mindestbetrag zur Unterteilung in digitale Auflösungsstufen gewünschter Größe und Anzahl aufweist, ausgelöst wird, und
- die Photodiodenflächen (11) in ihrer Längsausdehnung an die Breite des durch den Spalt (21) vorgegebenen Lichtstreifens (31) so angepasst und aneinandergereiht sind, dass trotz lichtunempfindlicher Stege (12), die zur elektrischen Isolation benachbarter Photodiodenflächen (11) notwendig sind, sich Anteile der lichtempfindlichen Photodiodenflächen (11) in Längsrichtung des reihenförmigen Photodiodenarrays (1) überlappen, wobei von dem Lichtstreifen (31) zu jedem Zeitpunkt mindestens zwei Photodiodenflächen (11) gleichzeitig

EP 1 189 072 A2

einen signifikanten Photostrom liefern.

2. Anordnung nach Anspruch 1, **dadurch gekennzeichnet, dass**
jede Photodiodenfläche (11) erste parallele Kanten, die entlang von zwei Geraden parallel zur Längsrichtung des Photodiodenarrays (1) ausgerichtet sind, sowie zweite parallele Kanten, die von der Orthogonalrichtung zu den ersten Kanten wesentlich verschieden sind, aufweist, wobei sich die ersten und zweiten parallelen Kanten schneiden und in Längsrichtung des Photodiodenarrays (1) unterschiedlich positionierte Ecken (112; 113; 114; 115) einer Photodiodenfläche (11) derart bilden, dass, in Längsrichtung des Photodiodenarrays (1) betrachtet, eine erste vordere Ecke (112) einer Photodiodenfläche (11) vor einer letzten hinteren Ecke (113) der vorhergehenden Photodiodenfläche (11) angeordnet ist.

3. Anordnung nach Anspruch 2, **dadurch gekennzeichnet, dass**
die erste vordere Ecke (112) einer Photodiodenfläche (11) vor der ersten hinteren Ecke (114) einer vorhergehenden Photodiodenfläche (11) angeordnet ist.

4. Anordnung nach Anspruch 1, **dadurch gekennzeichnet, dass**
das Photodiodenarray (1) aus mindestens zwei parallelen gleichartigen Reihen (13) von Photodiodenflächen (11) zusammengesetzt ist, wobei die Photodiodenreihen (13A; 13B; 13C) zueinander um einen Bruchteil des Mittenabstand der Photodiodenflächen (11) versetzt angeordnet sind, so dass vorhergehende und aufeinanderfolgende Photodiodenflächen (11) abwechselnd in den unterschiedlichen Reihen (13A; 13B; 13C) von Photodiodenflächen ($11a_1$; $11b_1$; $11c_1$) angeordnet sind und in Längsrichtung des Photodiodenarrays (1) äquidistant verteilt sind.

5. Anordnung nach Anspruch 3 oder 4, **dadurch gekennzeichnet, dass**
die erste vordere Ecke (112) einer Photodiodenfläche ($11b_1$) mit der zweiten vorderen Ecke (113) der vorhergehenden Photodiodenfläche ($11a_1$) zusammenfällt.

6. Anordnung nach einem der Ansprüche 2 bis 5, **dadurch gekennzeichnet, dass**
die Photodiodenflächen (11) Parallelogramme sind, wobei die Parallelogramme jeweils mit einem parallelen Kantenpaar parallel zur Längsrichtung des Photodiodenarrays (1) ausgerichtet sind.

7. Anordnung nach Anspruch 6, **dadurch gekennzeichnet, dass**
die Photodiodenflächen (11) Rhomben sind.

8. Anordnung nach einem der Ansprüche 2 bis 5, **dadurch gekennzeichnet, dass**
die Photodiodenflächen (11) in Form kongruenter stilisierter Pfeilspitzen (116) gestaltet sind, wobei die Pfeilspitzen (116) erste parallele Kanten in Längsrichtung des Photodiodenarrays (1) sowie gewinkelte zweite parallele Kanten aufweisen.

9. Anordnung nach einem der Ansprüche 2 bis 5, **dadurch gekennzeichnet, dass**
die Photodiodenflächen (11) Trapeze (117) sind, wobei die Trapeze (117) kongruent und benachbarte Trapeze (117) jeweils zueinander um 180° gedreht innerhalb einer linearen Photodiodenreihe (13) angeordnet sind.

10. Anordnung nach Anspruch 4, **dadurch gekennzeichnet, dass**
die Photodiodenflächen (11) Rechtecke (118) sind.

11. Anordnung nach Anspruch 4, **dadurch gekennzeichnet, dass**
die Photodiodenflächen (11) Quadrate sind.

12. Anordnung nach Anspruch 1, **dadurch gekennzeichnet, dass**
die Breite des Spaltes (21) so gewählt ist, dass der auf dem Photodiodenarray (1) abgebildete Lichtstreifen (31) die Größenordnung der Längsausdehnung einer Photodiodenfläche (11) aufweist.

13. Anordnung nach Anspruch 1, **dadurch gekennzeichnet, dass**
zur Auswertung der Lage des Lichtstreifens (31) und damit zur Bestimmung des Einfallswinkels (32) des Lichts nur Photoströme der Photodiodenflächen (11) vorgesehen sind, die in Längsrichtung des Photodiodenarrays (1) aufeinanderfolgend über einer definierten Rauschschwelle liegende Messwerte aufweisen, wobei, ausgehend von einer Photodiodenfläche (11) mit dem größten Photostrom, aus einer vorgewählten Anzahl in der Umgebung dieser Photodiodenfläche (11) mit größtem Photostrom der Schwerpunkt der Photoströme als Position der Schwerpunkt-

11

linie (311) des Lichtstreifens (31) bestimmbar ist.

**14.** Anordnung nach Anspruch 13, **dadurch gekennzeichnet, dass**
bei Verwendung eines einreihigen Photodiodenarrays (1) die Anzahl der zur Schwerpunktberechnung herangezogenen Photodiodenflächen (11) auf drei beschränkt ist.

**15.** Anordnung nach Anspruch 13, **dadurch gekennzeichnet, dass**
bei Verwendung eines zweireihigen Photodiodenarrays (1) die Anzahl der zur Schwerpunktberechnung herangezogenen Photodiodenflächen (11) auf fünf beschränkt ist.

**16.** Anordnung nach Anspruch 13, **dadurch gekennzeichnet, dass**
bei Verwendung mehrerer Reihen (13) von Photodiodenflächen (11) die Photodiodenreihen (13A; 13B) separat voneinander auswertbar sind, wobei die Photodiodenreihen (13) als redundante einreihige Photodiodenarrays (1) verwendbar sind.

**17.** Anordnung nach Anspruch 13, **dadurch gekennzeichnet, dass**
bei Verwendung mehrerer Reihen (13) von Photodiodenflächen (11) die Photodiodenreihen (13A; 13B) zusammen auswertbar sind, wobei die Messwerte der einzelnen Photodiodenflächen (11) in der Reihenfolge ihrer Position entlang der Längsrichtung des Photodiodenarrays (1) ausgewertet werden.

**18.** Anordnung nach Anspruch 1, **dadurch gekennzeichnet, dass**
zur Bestimmung des Einfallswinkels (32) von Licht in zwei Raumwinkelkoordinaten zwei gleichartige, separat ausgewertete Photodiodenarrays (1) orthogonal zueinander auf einem Chip (4) angeordnet sind, wobei beiden Photodiodenarrays (1) separate Spalte (21) zur Erzeugung des Lichtstreifens (31), die ebenfalls orthogonal zueinander liegen, auf einer gemeinsamen Blendenplatte (23) zugeordnet sind.

**19.** Anordnung nach Anspruch 18, **dadurch gekennzeichnet, dass**
für die Bestimmung des Einfallswinkels von Sonnenlicht mindestens ein zusätzlicher Einzelsensor (41) zum Erkennen des Vorhandenseins von Sonnenlicht auf dem Chip (4) vorhanden ist.

**20.** Anordnung nach Anspruch 18, **dadurch gekennzeichnet, dass**
mindestens ein mit einer Abdeckschicht versehener Einzelsensor (42) zur Erfassung des Dunkelstroms auf dem Chip (4) angeordnet ist, der in gleicher Technologie und Flächengröße wie jede der Photodiodenflächen (11) der Photodiodenarrays (1) hergestellt ist.

# Fig. 1

Fig. 2

Fig. 3

Fig. 4

**Fig. 5**

**Fig. 6**

**Fig. 7**

**Fig. 8**

**Fig. 9**